# EUROPEAN PATENT APPLICATION

(11) **EP 4 796 212 A1**
(43) Date of publication of application: **26.08.2026**
(21) Application number: 26152521.6
(22) Date of filing: 19.01.2026
(51) Int. Cl.: B01J 6/00, B01J 19/00

(54) **STACKED PYROLYSIS REACTOR**

(30) Priority: 11.02.2025 TW 114105024
(71) Applicant: Winner International Co., Ltd., 351 Toufen City Miaoli County (TW)
(72) Inventor: LIN, Chih-shen, 351 Toufen City (TW)
(74) Representative: Straus, Alexander

(57) **Abstract**

A stacked pyrolysis reactor comprises a gas supply unit, a recovery system, a pyrolysis reaction assembly, and a gas collection system. The recovery system is in communication with the gas supply unit and the pyrolysis reaction assembly, and the pyrolysis reaction assembly is in communication with the gas collection system. The pyrolysis reaction assembly comprises a reaction chamber formed by stacked reaction trays. Each reaction tray includes an alignment disc having gas passage apertures, guiding channels, and a collection port, and a lower surface of the alignment disc is provided with protrusions corresponding to the gas passage apertures. Cooperation between the gas passage apertures and the protrusions generates vortex disturbances that increase residence time of reaction gas, thereby improving heat transfer efficiency and gas pyrolysis conversion efficiency.

## Description

### FIELD OF INVENTION

The present disclosure relates to a stacked pyrolysis reactor, and more particularly to a pyrolysis reactor configured to perform high-efficiency gas conversion and to enable effective recovery of reaction products.

### BACKGROUND OF THE INVENTION

Conventional methane pyrolysis reactors predominantly employ a straight-through tubular configuration. In such designs, methane gas flows through a linear reaction tube at a relatively high velocity, which results in insufficient residence time for the pyrolysis reaction to proceed to completion and consequently leads to a reduced methane conversion rate. Moreover, because the effective heat transfer area in a straight-through tube is limited, a pronounced temperature gradient tends to develop between a tube wall and a central region of the tube. This non-uniform thermal distribution adversely affects reaction uniformity and completeness, thereby preventing methane from being fully decomposed into hydrogen and solid carbon. In addition, conventional reactors are commonly fabricated from nickel-chromium alloy steels, which impose an upper operational temperature limit of approximately 1200 °C. This material constraint restricts the achievable thermal efficiency of the pyrolysis process and, in turn, limits hydrogen production efficiency by capping the maximum reaction temperature.

To compensate for insufficient reaction time, existing methane pyrolysis reactors often rely on increasing an internal pressure within a furnace tube. While this approach may slow gas flow, it substantially increases energy consumption and results in poor overall energy efficiency. Furthermore, during prolonged operation, carbon deposition readily occurs as a by-product of the pyrolysis reaction. Such carbon deposits tend to adhere to an inner wall of the furnace tube, leading to flow obstruction, reduced heat transfer performance, and increased maintenance requirements. In addition, carbon black generated during the reaction is difficult to collect and remove in a controlled manner, which further compromises operational stability and long-term reliability of the reactor system.

### SUMMARY OF THE INVENTION

In view of the foregoing deficiencies of the prior art, the present disclosure provides a stacked pyrolysis reactor capable of significantly improving methane conversion efficiency while effectively mitigating carbon black accumulation and blockage during operation.

To achieve the above object, the present disclosure provides a stacked pyrolysis reactor, comprising: a recovery system in communication with a gas supply unit; a pyrolysis reaction assembly comprising a reaction chamber in communication with the recovery system and a heating assembly disposed around the reaction chamber, the reaction chamber comprising a plurality of reaction trays stacked along a flow direction; and a gas collection system in communication with the reaction chamber.

Each of the reaction trays comprises: an alignment disc; a coupling ring disposed below the alignment disc; a collection portion extending from a lower surface of the alignment disc, the collection portion defining a collection port passing through the alignment disc and the collection portion; a plurality of guiding channels disposed on an upper surface of the alignment disc and extending radially outward from the collection port as a center, each of the guiding channels comprising a plurality of gas passage apertures spaced apart from one another; and a plurality of protrusions disposed on the lower surface of the alignment disc at positions corresponding to the gas passage apertures.

The upper surface of the alignment disc is inclined toward the collection port, such that reaction by-products generated on the alignment disc are guided toward the collection port under gravity and flow-induced forces.

The reaction chamber is formed of a material selected from a high-melting-point composite ceramic, a composite metal, or a high-melting-point carbide, thereby enabling operation at elevated temperatures suitable for high-efficiency methane pyrolysis.

A receiving groove and an interlocking member having mutually matching contours are respectively disposed around a periphery of each alignment disc and on an end surface of the coupling ring, such that adjacent reaction trays are sealingly and stably engaged with one another when stacked.

A lower end portion of each collection portion extends into the collection port of another collection portion disposed below, thereby establishing a vertically continuous collection path through the stacked reaction trays.

The pyrolysis reaction assembly is electrically connected to an electrostatic potential unit, such that electrostatic attraction or repulsion may be selectively applied to reduce adhesion of carbon black to internal surfaces of the pyrolysis reaction assembly.

The recovery system comprises a recovery conduit, a recovery tank in communication with the recovery conduit, an extractor in communication with both the recovery tank and the recovery conduit, a plurality of valves disposed between functional components, and a vibrator and an electrostatic potential unit disposed on an outer wall surface of the recovery conduit, wherein the vibrator and the electrostatic potential unit facilitate detachment and downward collection of carbon black.

The pyrolysis reaction assembly further comprises a bottom collection base disposed below the reaction chamber and connected to the recovery conduit, a valve being disposed between the bottom collection base and the recovery conduit to selectively control communication therebetween.

The bottom collection base is formed of a low-thermal-conductivity, high-temperature-resistant ceramic or composite material, thereby reducing heat loss and protecting downstream components from excessive thermal exposure.

The gas collection system comprises a gas collection conduit having two curved portions and being in communication with the reaction chamber and a storage vessel, respectively, such that reaction gas is conveyed while suppressing backflow of solid by-products.

A waste heat exchanger is disposed between the two curved portions of the gas collection conduit for recovering excess thermal energy from reaction gas exiting the reaction chamber.

The curved portion of the gas collection conduit located adjacent to the pyrolysis reaction assembly is formed of a low-thermal-conductivity, high-temperature-resistant ceramic or composite material to confine thermal energy within a high-temperature zone of the reactor.

The stacked pyrolysis reactor further comprises a reactor enclosure, an interior of the reactor enclosure accommodating the pyrolysis reaction assembly, the recovery system, the heating assembly, and the gas collection system.

The interior of the reactor enclosure is filled with a non-reactive gas or an insulating material, or the interior of the reactor enclosure is configured as a vacuum chamber to prevent oxidation interference and reduce thermal loss.

### BRIEF DESCRIPTION OF THE DRAWINGS

FIG. 1 is a schematic view of a stacked pyrolysis reactor according to the present disclosure.
FIG. 2 is a top view of a reaction tray according to the present disclosure.
FIG. 3 is a cross-sectional side view illustrating a stacked configuration of the reaction trays according to the present disclosure.
FIG. 4 is an enlarged schematic view illustrating another embodiment of the stacked pyrolysis reactor according to the present disclosure.

### DETAILED DESCRIPTION OF THE PREFERRED EMBODIMENTS

In order to render the present disclosure complete and readily understood by those skilled in the art, the following description sets forth preferred embodiments and specific implementations of the present disclosure. It is to be understood, however, that the disclosed embodiments are illustrative rather than limiting, and that the present disclosure is not restricted to the particular configurations, arrangements, or directional orientations described herein. Alternative embodiments capable of achieving the same or equivalent functions and operational effects may be implemented without departing from the spirit and scope of the present disclosure. Directional terms such as "front," "rear," "upper," "lower," "left," and "right," as used herein, are employed solely for ease of description with reference to the drawings and do not impose any limitation on the orientation of the invention.

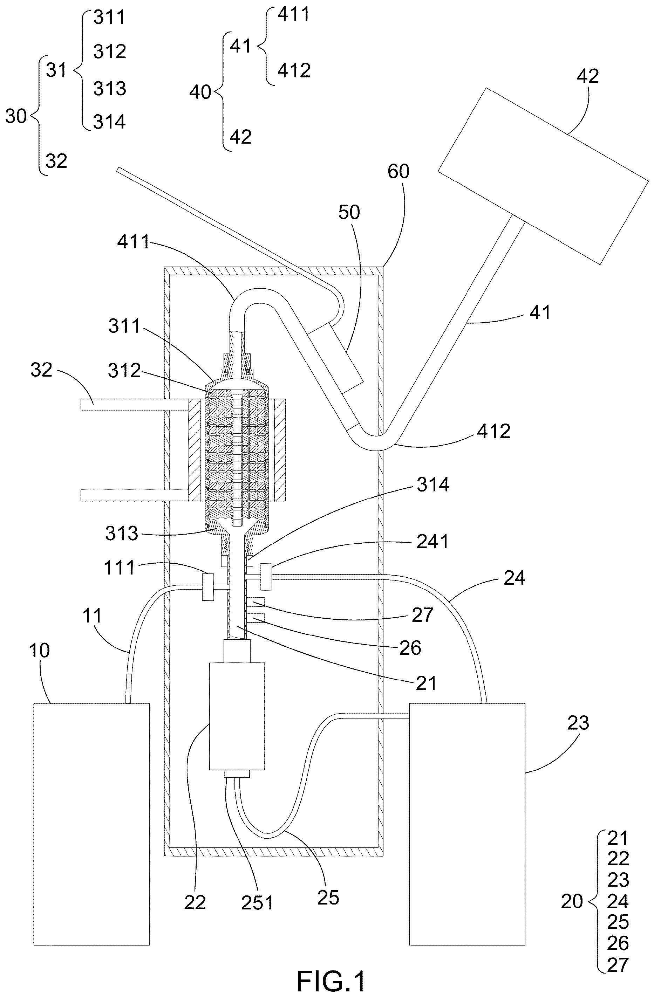

Referring to FIG. 1, a preferred embodiment of a stacked pyrolysis reactor according to the present disclosure is illustrated. The stacked pyrolysis reactor comprises a gas supply unit 10, a recovery system 20, a pyrolysis reaction assembly 30, and a gas collection system 40. The gas supply unit 10 is connected to the recovery system 20, and the pyrolysis reaction assembly 30 is respectively connected to the recovery system 20 and the gas collection system 40, such that process gas sequentially flows through the recovery system 20, the pyrolysis reaction assembly 30, and the gas collection system 40.

The recovery system 20 comprises a recovery conduit 21, a recovery tank 22, a extractor 23, and a vibrator 26. The recovery conduit 21 is in communication with the gas supply unit 10 via an inlet conduit 11, such that gas supplied from the gas supply unit 10 is introduced into the recovery conduit 21. A lower portion of the recovery conduit 21 is in communication with the recovery tank 22, and a lower portion of the recovery tank 22 is in communication with the extractor 23 via an extraction conduit 25. When an extraction pump disposed in the extractor 23 is activated, gas and carbon black contained in the recovery tank 22 are drawn into the extractor 23. The extractor 23 separates and filters the carbon black and returns the filtered gas to the recovery conduit 21 via a return conduit 24. The inlet conduit11, the return conduit 24, and the extraction conduit 25 are respectively provided with a first valve 111, a second valve 241, and a fourth valve 251 for selectively establishing or interrupting fluid communication through corresponding pipelines. The vibrator 26 and an electrostatic potential unit 27 are mounted on an outer wall surface of the recovery conduit 21, such that carbon black adhering to the pyrolysis reaction assembly 30 and an inner wall surface of the recovery conduit 21 is induced to detach and fall into the recovery tank 22. In other embodiments, the electrostatic potential unit 27 is electrically connected to the pyrolysis reaction assembly 30 and applies variations in positive and negative potential to generate electrostatic attraction or repulsion, thereby suppressing adhesion and blockage caused by carbon black and other reaction by-products.

The pyrolysis reaction assembly 30 comprises a reaction chamber 31 and a heating assembly 32. The heating assembly 32 is disposed around the reaction chamber 31 in a contact or non-contact configuration to provide thermal energy for pyrolysis. The reaction chamber 31 is formed of a material selected from, but not limited to, a high-melting-point composite ceramic or a carbide material, such as tungsten carbide, thereby enabling the pyrolysis reaction temperature to be increased to above 2000 °C and allowing an overall gas conversion rate exceeding 90%. The reaction chamber 31 comprises, in a vertical arrangement from top to bottom, a top support cap 311, a plurality of reaction trays 312 stacked along a flow direction, and a bottom collection base 313. The bottom collection base 313 is connected to the recovery conduit 21, and a third valve 314 is disposed between the reaction chamber 31 and the recovery conduit 21 to selectively control communication and isolation therebetween. By stacking the reaction trays 312, an effective heat transfer area within the reaction chamber 31 is substantially increased, thereby promoting uniform temperature distribution and preventing excessive temperature gradients between a central region and a wall region of the reaction chamber 31, which would otherwise result in incomplete gas reaction and reduced conversion efficiency. Moreover, vortex disturbances generated between adjacent reaction trays 312 extend the residence time of the gas within a high-temperature zone and facilitate removal of carbon black to reduce surface adhesion.

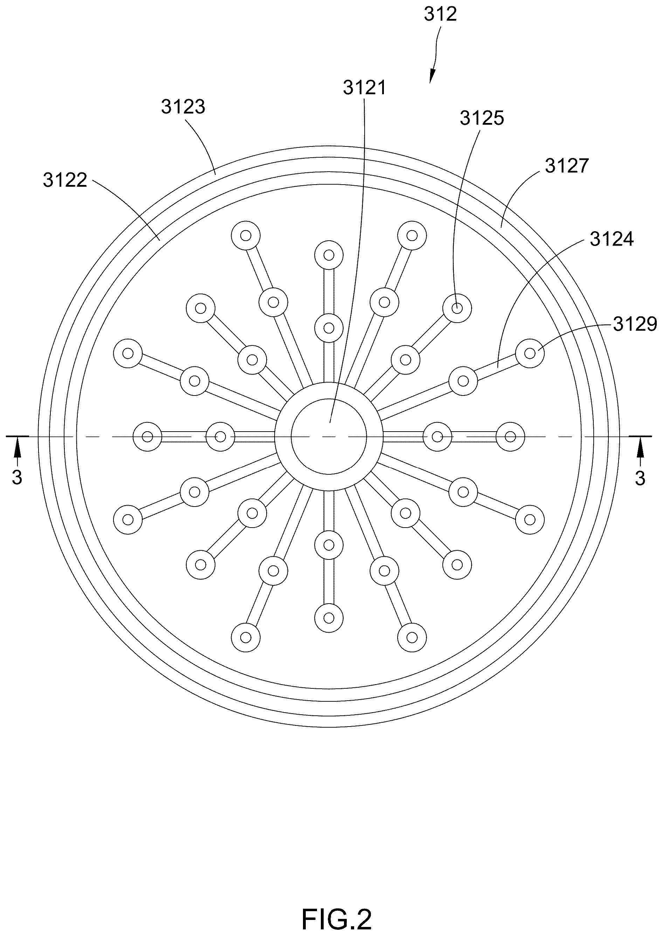

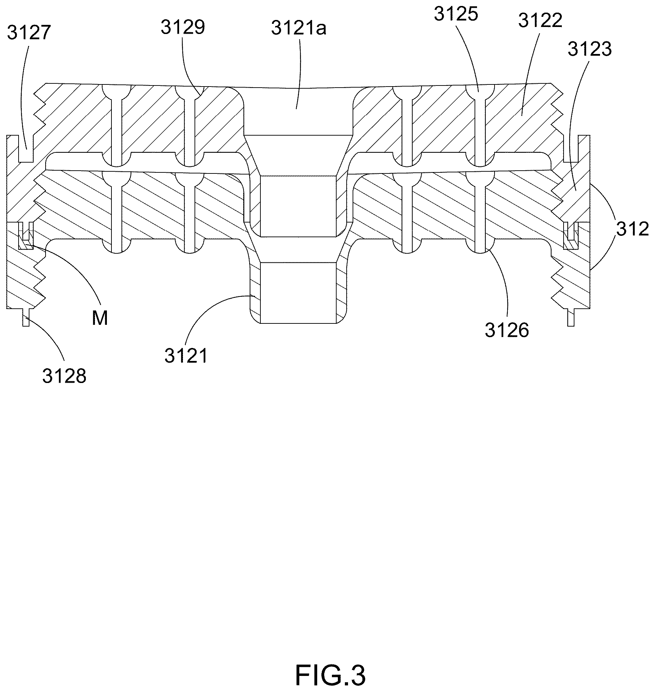

Referring further to FIGS. 2 and 3, each reaction tray 312 comprises a collection portion 3121, an alignment disc 3122, and a coupling ring 3123. The coupling ring 3123 is disposed below the alignment disc 3122, and the collection portion 3121 extends from a lower surface of the alignment disc 3122. An outer annular surface of the alignment disc 3122 and an inner annular surface of the coupling ring 3123 are respectively provided with mutually matching fitting structures, such that the reaction trays 312 are sequentially stacked through engagement between the alignment disc 3122 and the coupling ring 3123 to collectively define a pyrolysis reaction zone within the reaction chamber 31. Each collection portion 3121 defines a collection port 3121a extending through the alignment disc 3122 and the collection portion 3121, and a lower end portion of each collection portion 3121 extends into the collection port 3121a of another collection portion 3121 disposed in a lower layer. An upper surface of each alignment disc 3122 is inclined toward the collection port 3121a and is provided with a plurality of guiding channels 3124. The guiding channels 3124 extend radially outward from the collection port 3121a as a center. In cooperation with the inclined upper surface of the alignment disc 3122, the guiding channels 3124 effectively guide carbon black generated during pyrolysis toward the guiding channels 3124, gas passage apertures 3125, or the collection port 3121a, such that the carbon black ultimately falls into the recovery tank 22 located below. In the present embodiment, the outer annular surface of each alignment disc 3122 and the inner annular surface of the coupling ring 3123 are formed as threaded structures or mortise/tenon engagement structures, enabling adjacent reaction trays 312 to be secured by bolting or snap-fitting.

To further increase the residence time of the gas within the high-temperature reaction region and promote complete pyrolysis, each of the guiding channels 3124 is provided with the plurality of gas passage apertures 3125 spaced apart from one another and passing through the alignment disc 3122. An outlet of each gas passage aperture 3125 is provided with a protrusion 3126. When the gas flows toward the protrusions 3126, vortex disturbances are generated between adjacent reaction trays 312 and between a lowermost reaction tray 312 and the bottom collection base 313, thereby enhancing heat transfer between the gas and the reaction trays 312 and facilitating removal of carbon black toward the guiding channels 3124 or the collection port 3121a to suppress adhesion. The gas then flows upward through the gas passage apertures 3125, thereby improving the conversion efficiency of the pyrolysis reaction and effectively replacing conventional approaches that rely on increased pressure to reduce gas flow velocity, thus lowering overall energy consumption. Additionally, the vortex disturbances further reduce adhesion and blockage of carbon black within the reaction chamber 31. Notably, a surface of each alignment disc 3122 is further provided with collection recesses 3129 surrounding inlet regions of the gas passage apertures 3125. Since the collection recesses 3129 are fluidly connected to the collection port 3121a via the guiding channels 3124, relatively large carbon black particles produced during pyrolysis are more effectively guided toward the collection port 3121a or toward a lower reaction tray 312 for subsequent collection.

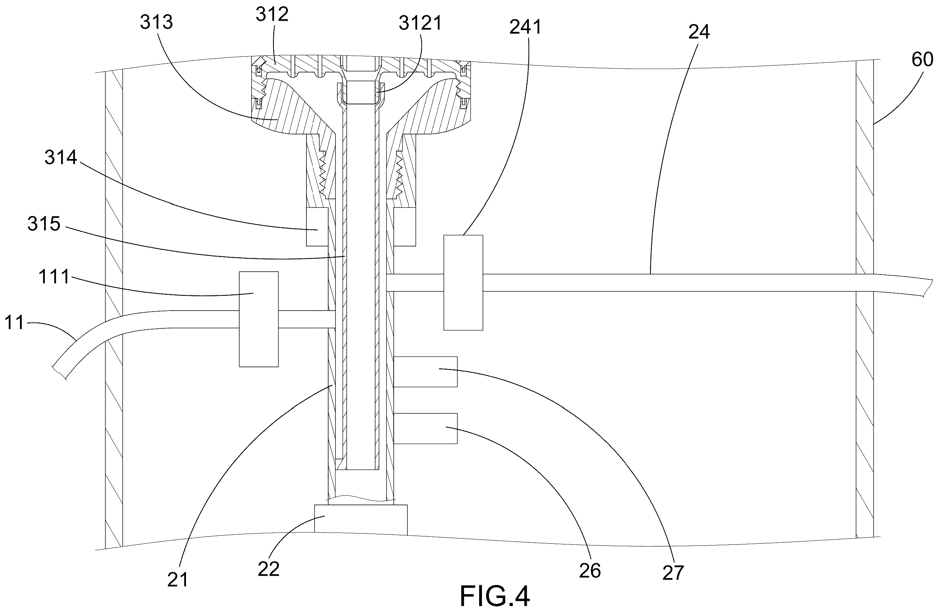

Referring further to FIG. 4, another embodiment of the present disclosure is illustrated. In this embodiment, for a lowermost reaction tray 312, a free end of the collection portion 3121 is further connected to a solid discharge tube 315 extending from the collection portion 3121 into an interior of the recovery conduit 21. Gas flows upward through a gap formed between the solid discharge tube 315 and the recovery conduit 21 and then enters another reaction tray 312 disposed above through the gas passage apertures 3125. Carbon black and other reaction by-products generated during pyrolysis are guided downward through the solid discharge tube 315 and collected in the recovery tank 22. By separating the upward flow of gas from the downward discharge of solid products, upward entrainment of carbon black and other by-products is reduced, thereby mitigating pipeline blockage.

In other embodiments, a receiving groove 3127 and an interlocking member 3128 are respectively disposed around a periphery of each alignment disc 3122 and on an end surface of the coupling ring 3123. When adjacent reaction trays 312 are assembled, a gap is defined between each receiving groove 3127 and a corresponding interlocking member 3128. The gap is configured to accommodate a liquid metal M, thereby forming a gas-tight reaction space between stacked reaction trays 312 and enhancing sealing performance under high-temperature operating conditions.

The gas collection system 40 comprises a gas collection conduit 41 and a storage vessel 42. Two ends of the gas collection conduit 41 are respectively in communication with the reaction chamber 31 and the storage vessel 42. The gas collection conduit 41 extends upward from the top support cap 311 and then bends downward to form a first curved portion 411. Thereafter, the gas collection conduit 41 continues to extend downward and bends upward to form a second curved portion 412, and then extends further to connect with the storage vessel 42. A waste heat exchanger 50 is disposed on an outer wall surface of the gas collection conduit 41 between the first curved portion 411 and the second curved portion 412 for recovering excess thermal energy carried by reaction gas. The bottom collection base 313 and the first curved portion 411 are preferably formed of a low-thermal-conductivity, high-temperature-resistant ceramic material, such as zirconia, so as to confine thermal energy within the reaction chamber 31 and a portion of the gas collection conduit 41, thereby preventing thermal damage to the storage vessel 42 and the recovery conduit 21.

To prevent interference of the pyrolysis reaction by oxygen or external gases, in other embodiments, the stacked pyrolysis reactor further comprises a reactor enclosure 60. An interior of the reactor enclosure 60 accommodates the recovery conduit 21, the recovery tank 22, the pyrolysis reaction assembly 30, and a portion of the gas collection conduit 41. The interior of the reactor enclosure 60 is evacuated or filled with a non-reactive gas and an insulating material, thereby providing an oxygen-free environment that prevents interference with the gas pyrolysis reaction and reduces thermal loss that would otherwise degrade system efficiency.

Further explanation is provided below with respect to operational steps of the stacked pyrolysis reactor of the present disclosure. When preparing to perform a pyrolysis reaction on a gas such as methane, the heating assembly 32 is activated and continuously supplies thermal energy to maintain the reaction chamber 31 at a temperature exceeding 2100 °C. Simultaneously, the first valve 111 and the third valve 314 are opened, while the second valve 241 and the fourth valve 251 are closed. The gas supply unit 10 then supplies methane, which sequentially flows through the inlet conduit11, the recovery conduit 21, and into the reaction chamber 31. Methane undergoes pyrolysis between adjacent reaction trays 312 to produce hydrogen and carbon black. The hydrogen sequentially flows through the gas passage apertures 3125, enters the gas collection system 40, and is stored in the storage vessel 42. The carbon black sequentially moves through the guiding channels 3124, the gas passage apertures 3125, and the collection ports 3121a, and ultimately falls into the recovery tank 22.

When performing a carbon black recovery operation, the first valve 111 and the third valve 314 are closed, and the second valve 241 and the fourth valve 251 are opened. The extraction pump disposed in the extractor 23 is activated to draw carbon black collected in the recovery tank 22 through the extraction conduit 25 into the extractor 23 for collection and filtration. Gas accompanying the carbon black into the extractor 23 is returned to the recovery conduit 21 via the return conduit 24, where the gas remains until a subsequent opening of the third valve 314 allows the gas to re-enter the reaction chamber 31 for further reaction, thereby reducing waste of unreacted gas. Through coordinated control of the valves, a circulation loop is formed within the recovery system 20, preventing back-drawing of hydrogen or ingress of external gas during carbon black collection and thus avoiding contamination.

Accordingly, the stacked pyrolysis reactor of the present disclosure forms the reaction chamber 31 through a stacked configuration, thereby providing an enlarged heat transfer area and a uniform-temperature pyrolysis reaction zone. The cooperative arrangement of the gas passage apertures 3125 and the protrusions 3126 generates vortex disturbances that enhance gas-surface heat exchange and improve gas conversion efficiency. The guiding channels 3124 guide carbon black present on the collection recesses 3129 or the alignment disc 3122 toward the gas passage apertures 3125 or the collection ports 3121a, thereby providing an efficient carbon black collection mechanism. Furthermore, valve control within the recovery system 20 not only redirects unreacted gas back into the reaction chamber 31 to reduce raw material consumption, but also prevents hydrogen backflow or external gas ingress that could cause contamination, thereby improving overall operational stability, efficiency, and safety.

## Claims

1. A stacked pyrolysis reactor, comprising:
a recovery system (20) in communication with a gas supply unit (10);
a pyrolysis reaction assembly (30) comprising a reaction chamber (31) in communication with the recovery system (20) and a heating assembly (32) disposed around the reaction chamber (31), the reaction chamber (31) comprising a plurality of reaction trays (312) stacked along a flow direction; and
a gas collection system (40) in communication with the reaction chamber (31).

2. The stacked pyrolysis reactor according to claim 1, wherein each of the reaction trays (312) comprises:
an alignment disc (3122);
a coupling ring (3123) disposed below the alignment disc (3122);
a collection portion (3121) extending from a lower surface of the alignment disc (3122), the collection portion (3121) defining a collection port (3121a) passing through the alignment disc (3122) and the collection portion (3121);
a plurality of guiding channels (3124) disposed on an upper surface of the alignment disc (3122) and extending radially outward from the collection port (3121a) as a center, each of the guiding channels (3124) comprising a plurality of gas passage apertures (3125) spaced apart from one another; and
a plurality of protrusions (3126) disposed on the lower surface of the alignment disc (3122) at positions corresponding to the gas passage apertures (3125).

3. The stacked pyrolysis reactor according to claim 2, wherein the upper surface of the alignment disc (3122) is inclined toward the collection port (3121a).

4. The stacked pyrolysis reactor according to claim 1, wherein the reaction chamber (31) is formed of a material selected from a high-melting-point composite ceramic, a composite metal, or a high-melting-point carbide.

5. The stacked pyrolysis reactor according to claim 2, wherein a receiving groove (3127) and an interlocking member (3128) having mutually matching contours are respectively disposed around a periphery of the alignment disc (3122) and on an end surface of the coupling ring (3123).

6. The stacked pyrolysis reactor according to claim 2, wherein a lower end portion of each collection portion (3121) extends into the collection port (3121a) of another collection portion (3121) disposed below.

7. The stacked pyrolysis reactor according to claim 1, wherein the pyrolysis reaction assembly (30) is electrically connected to an electrostatic potential unit (27).

8. The stacked pyrolysis reactor according to claim 1, wherein the recovery system (20) comprises a recovery conduit (21), a recovery tank (22) in communication with the recovery conduit (21), an extractor (23) in communication with the recovery tank (22) and the recovery conduit (21), a plurality of valves (111,241,251) disposed between components, and an electrostatic potential unit (27) and a vibrator (26) disposed on an outer wall surface of the recovery conduit (21).

9. The stacked pyrolysis reactor according to claim 8, wherein the pyrolysis reaction assembly (30) further comprises a bottom collection base (313) disposed below the reaction chamber (31) and connected to the recovery conduit (21), and a valve (314) disposed between the bottom collection base (313) and the recovery conduit (21).

10. The stacked pyrolysis reactor according to claim 9, wherein the bottom collection base (313) is formed of a low-thermal-conductivity, high-temperature-resistant ceramic or composite material.

11. The stacked pyrolysis reactor according to claim 1, wherein the gas collection system (40) comprises a gas collection conduit (41) having two curved portions (411,412) and being in communication with the reaction chamber (31) and a storage vessel (42), respectively.

12. The stacked pyrolysis reactor according to claim 11, wherein a waste heat exchanger (50) is disposed between the two curved portions (411,412) of the gas collection conduit (41).

13. The stacked pyrolysis reactor according to claim 11, wherein the two curved portion (411,412) of the gas collection conduit (41) located adjacent to the pyrolysis reaction assembly (30) is formed of a low-thermal-conductivity, high-temperature-resistant ceramic or composite material.

14. The stacked pyrolysis reactor according to claim 1, further comprising a reactor enclosure (60), an interior of the reactor enclosure (60) accommodating the pyrolysis reaction assembly (30), the recovery system (20), the heating assembly (32), and the gas collection system (40).

15. The stacked pyrolysis reactor according to claim 14, wherein the interior of the reactor enclosure (60) is filled with a non-reactive gas or an insulating material, or the interior of the reactor enclosure (60) is configured as a vacuum chamber.
